# EUROPEAN PATENT APPLICATION

(11) **EP 2 479 098 A1**
(43) Date of publication of application: **25.07.2012**
(21) Application number: 12150627.3
(22) Date of filing: 10.01.2012
(51) Int. Cl.: B62M 3/04, B62M 3/02

(54) **Crank mechanism for bicycles**

(30) Priority: 25.01.2011 IT MI20110085
(71) Applicant: Zani, Zeno, 47522 Cesena (IT)
(72) Inventor: Zani, Zeno, 47522 Cesena (IT)
(74) Representative: Laghi, Alberto

(57) **Abstract**

A crank mechanism (P) for bicycles, in particular racing bicycles on roads, unsurfaced roads or tracks, comprises a winch rod (1), pedaling means (4) coupled with an end (6) of the rod (1), and also an arm (13') of a connecting-rod (13) of which one end is rotatingly coupled with respect to said rod (1) in correspondence with said end (6) of the rod (1); the pedaling means (4) are rigidly fixed to an opposite end of said arm (13').

## Description

The present invention relates to a crank mechanism for bicycles.

In particular, the present invention can be advantageously applied in the field of bicycles, especially but not exclusively racing bicycles for competitions on roads, unsurfaced roads or tracks, to which the following description will make specific reference without entering into specific details.

### State of the art

In general, all bicycles are equipped with a pair of cranks which define a thrust mechanism of the winch type, and wherein each crank comprises a winch rod of which one of its ends is fixed to a supported central horizontal rotational hub or shaft which rotates inside a hollow cylindrical seat of the bicycle frame, or said end is integrated with the centre of a toothed crown (called sprocket wheel) coupled with the same central shaft.

A pedal is fixed, by means of a rotatable idle pin around its own axis, in a hole at the opposite end of the above-mentioned winch rod, thus defining a known L-shaped structure with the rod itself.

Conventionally, the longitudinal dimension or length of the above winch rod, i.e. the distance between the rotation axis of the central shaft and the rotation axis of the pedal, is determined in relation to the dimension or size of the bicycle on which the cranks are assembled.

An objective of the present invention is to provide a crank mechanism for bicycles whose use allows a considerable increase in the sustainable pedal thrust frequency to be obtained, with a reduction in the muscular stress of the cyclist with respect to a traditional crank mechanism as described above.

A further objective of the present invention is to provide a crank mechanism capable of producing a considerable increase in the performances of the cyclist.

Another objective of the present invention is to provide a crank mechanism which considerably improves the pedal thrust efficacy.

Yet another objective of the present invention is to provide a crank mechanism capable of significantly reducing muscular and in particular articular problems of the cyclist.

A further objective of the invention is to provide a crank mechanism capable of increasing the resonance frequency of the cyclist, especially during uphill cycling runs.

The technical characteristics of the invention, according to the above objectives, can be clearly found in the contents of the claims provided hereunder, and the advantages of the same will appear more evident from the following detailed description referring to the enclosed figures which schematically illustrate a preferred but non-limiting embodiment of the crank mechanism in question, wherein:
- figures 1a and 1b represent the state of the art (Prior Art) relating to bicycle cranks, in respective side and front views;
- figures 2a and 2b illustrate a preferred embodiment of the crank mechanism, object of the present invention, shown in respective partially sectional side and front views and with some parts removed for the sake of clarity; and
- figures 3a and 3b represent a side view of the crank mechanism in question, and a front view of a pair of cranks of the mechanism of figures 2a and 2b to be assembled on a racing bicycle.

### Description of the invention

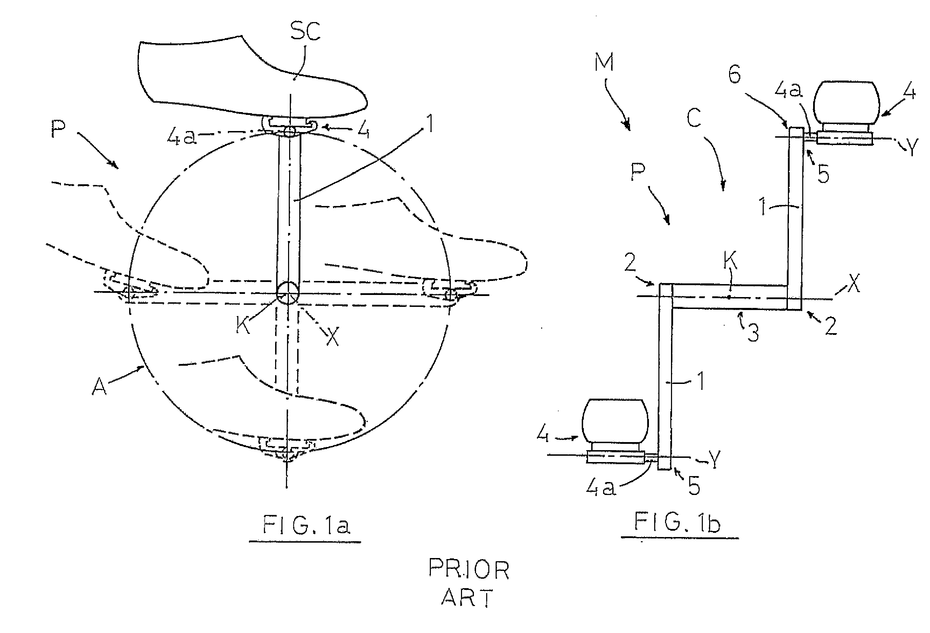

With particular reference to figures 1b, and figure 1a, C indicates as a whole a traditional and known pair of cranks P defining a winch thrust mechanism M (not illustrated), and wherein each crank P of the pair C comprises a winch rod 1, of which one of its ends 2 is fixed to a central rotational hug or shaft 3 around a supported horizontal axis X which rotates inside a hollow cylindrical seat (known and not illustrated) of the frame of the bicycle, or said end 2 is integrated with the centre of a toothed crown (not illustrated and known as sprocket-wheel) coupled with the same central shaft 3.

According to the traditional configuration of the known state of the art of figures 1a to 1b, a pedal 4 is fixed, by means of its supporting pin 4a which can rotate in idle around an axis Y, in a hole 5 situated at the opposite end 6 of the above winch rod 1, defining with the rod 1 itself an L-shaped structure.

In this way, according to what is illustrated in figure 1a, the pin 4a (and therefore substantially the shoe SC in the cyclist's foot when pedaling) is suitable for following a circular run A (in a mixed line) with respect to a rotation centre K situated on the axis X.

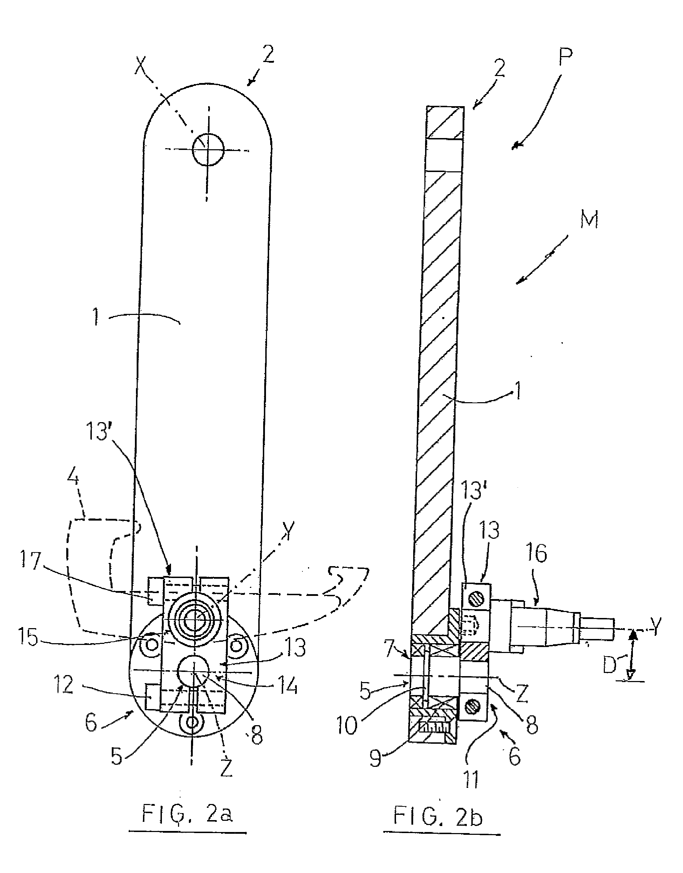

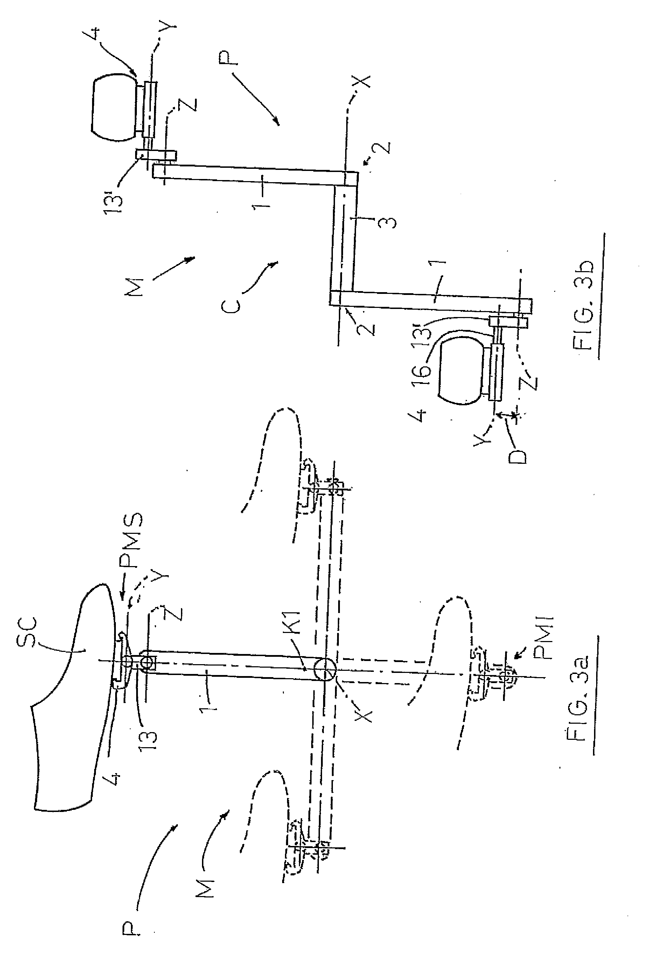

According to a preferred embodiment of the present invention illustrated in figures 2a and 2b, and 3a and 3b, with respect to the traditional known configuration described above, the end 7 of a pin element 8 is inserted in correspondence with the hole 5 at the end 6 of the winch 1 of the crank P of each pair C, said pin 8 being rotatingly assembled with respect to its own axis Z with the use of bearing means 9 and washer means 10.

A connecting-rod (13) defined by an arm 13' is fixed at the opposite end 11 of the pin 8, by screw fixing 12 or similar type of fixing, in correspondence with a first hole 14 situated on the arm 13' itself.

An end of a supporting pin 16 with an axis Y of the pedal 4 is inserted in correspondence with a second hole 15 situated on the arm 13' of the connecting-rod 13 at the opposite end with respect to the above hole 14, said pin being rigidly fixed to the arm 13' by a fixing 17 of the screw or similar type.

According to the present invention, the winch rod 1 has a greater longitudinal dimension or length with respect to the standard length of the corresponding rods of traditional cranks: if, in fact, the length of the rod in traditional cranks is 170-175 millimeters approximately, the rod 1 according to the invention has lengths which can advantageously vary from 180 to 210 millimeters approximately.

It should also be pointed out that the greater length of the rod 1 of the present invention described above is advantageously equal to a fixed multiple of the longitudinal dimension or length of the arm 13' of the connecting-rod 13, and is in a proportionality ratio with the dimensions of the lower limbs of the cyclist.

When in use, whereas the pedal 4 is constrained to the connecting rod 13 and stationary with respect to the axis Y in an orthogonal position with respect to the arm 13', the same pedal 4 is free to rotate with respect to the winch rod 1 around the axis Z so as to constantly maintain the position of the pedal 4 substantially horizontal (and therefore the cyclist's foot in the shoe SC) during the rotation of the winch rod 1 with respect to the axis X as a result of the thrust exerted by the cyclist's foot on the pedal itself 4 during pedaling (Figure 3a).

The supporting pin 16 of the pedal 4 (and therefore substantially the shoe SC in the cyclist's foot during pedaling) is consequently suitable for following a circular run (not illustrated in figure 3a) around a rotation centre K1 shifted with respect to the above-mentioned rotation centre K on the axis X, by a distance equal to the distance D between the two axes Y and Z in the arm 13' (figures 2b and 3a).

The pedal 4 is of the fixing type of the shoe SC with heel "release" or rapid disengagement, as shown in the enclosed figures and currently in use in racing bicycles.

The innovative modification M described above allows the cyclist to exert on the pair C of cranks P assembled on the frame of the bicycle, a much higher pedal thrust force with respect to those obtained with traditional cranks. In correspondence with a portion (figure 3a) of an upper face of the useful pushing sector (semicircular sector defined between an upper deadlock PMS and a lower deadlock PMI), the moment or pushing torque with respect to the traditional system is greater, as the pushing lever is defined by the sum of the winch 1 having a greater length and the connecting-rod 13 of each crank P of the pair C, which therefore has a greater length with respect to the lever formed by the traditional winch 1 alone; in the remaining lower face of the above pushing sector, the pedal thrust efficacy remains substantially unvaried with respect to the traditional system.

Consequently, with the same musculature of the cyclist, the pedal thrust which the same cyclist is capable of effecting with a pair of cranks of the innovative mechanism in question, is much more effective, allowing considerable accelerations and with significant increases in the sustainable pedal thrust frequency which have proved to be particularly evident in uphill cycling runs.

It should also be pointed out that tests effected with a bicycle equipped with a pair of cranks of the mechanism M of the present invention as described above have surprisingly shown considerable reductions with time of muscular and articular problems (e.g. the knees) from which cyclists normally suffer, above all racing cyclists during high-level competitions.

Advantageous increases in the resonance frequency of cyclists have also been noted.

Finally, it should be pointed that, with the invention M in question, bicycle cranks can be produced specifically in relation to the structure and/or length of the lower limbs and/or musculature of the cyclist, and also in relation to the specific use or various routes during competitions (e.g. alpine routes, chronometric laps etc.).

An optimum and economically advantageous adaptation is therefore obtained to the typical run and/or physical conditions of cyclists, with small, simple and rapid modifications to the structure of the bicycle.

The invention thus conceived can undergo numerous modifications and variants, all included in the scope of the inventive concept; furthermore, all the details can substituted by technically equivalent elements.

## Claims

1. A crank (P) mechanism (M) for bicycles, comprising winch means (1) and pedaling means (4) coupled with said winch means (1); **characterized in that** it also comprises connecting-rod means (13, 13') rotatingly coupled with said winch means (1); said pedaling means (4) being rigidly fixed to said connecting-rod means (13, 13').

2. The mechanism according to claim 1, **characterized in that** said winch means (1) are defined by a rod (1) and that said connecting-rod means (13) are defined by an arm (13'); pin means (8) being rotatingly assembled in a hole (5) of an end (6) of said rod (1) and said arm (13') being fixed on said pin means (8) in correspondence with a first hole (14) present on the arm (13') itself.

3. The mechanism according to claim 2, **characterized in that** said rod (1) has a length or longitudinal dimension equal to a multiple of the longitudinal dimension or length of said arm (13') of said connecting-rod means (13).

4. The mechanism according to claim 2 or 3, **characterized in that** said rod (1) has a length or longitudinal dimension proportional to the dimensions of the lower limbs of the cyclist.

5. The mechanism according to any of the previous claims from 2 to 4, **characterized in that** it comprises bearing means (9) suitable for allowing the rotation of said pin means (8) inside said first hole (14) with respect to a horizontal axis (z).

6. The mechanism according to any of the previous claims from 2 to 5, **characterized in that** said pedaling means (4) comprise supporting pin means (16) with a horizontal axis (Y) and a pedal (4) fixed onto said supporting pin means (16); said supporting pin means (16) being assembled and rigidly fixed in a second hole (15) of said arm (13').

7. The mechanism according to claim 6, **characterized in that** said pedal (4) is a pedal of the fast release type.

8. A bicycle, in particular a racing bicycle on roads, unsurfaced roads or tracks, **characterized in that** it is equipped with a pair (C) of cranks (P) of the mechanism (M) according to one or more of the previous claims from 1 to 7.
